# EUROPÄISCHE PATENTSCHRIFT

(11) **EP 0 578 073 B1**
(45) Veröffentlichungstag und Bekanntmachung des Hinweises auf die Patenterteilung: **22.05.1996**
(21) Anmeldenummer: 93110148.9
(22) Anmeldetag: 25.06.1993
(51) Int. Cl.: B60D 1/02

(54) **Anhängekupplung**
Trailer coupling
Attelage de remorque

(30) Priorität: 08.07.1992 DE 4222343
(43) Veröffentlichungstag der Anmeldung: 12.01.1994
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- EP-A- 0 149 453
- DE-A- 3 540 641
- DE-C- 696 161
- US-A- 1 939 463

## Beschreibung

Die Erfindung betrifft eine Anhängekupplung gemäß dem Oberbegriff des Patentanspruchs 1.

Bei aus der Praxis bekannten Anhängekupplungen dieser Art sind der Verriegelungsmechanismus und der Verstellantrieb baulich aufwendig und störungsanfällig. Die Bedienung der Anhängekupplung ist umständlich. Die Abstützung des in der Kuppelstellung verriegelten Kuppelzapfens ist unbefriedigend und verschleißanfällig. Bei hohen, auf den Kuppelzapfen einwirkenden Lasten können die im Kupplungskopf enthaltenen Komponenten leicht brechen oder bis zur Funktionsunfähigkeit deformiert werden.

Eine aus der DE-PS 696 161 bekannte Anhängekupplung besteht aus einem Kuppelzapfen, der einen Bolzen aufweist. Der Bolzen wird von einer Kulisse eines schwenkbaren Armes erfaßt, so daß eine Schwenkbewegung des Armes eine Verschiebung des Kuppelzapfens bewirkt und diesen in der Kuppelstellung verriegelt. Der schwenkbare Arm besitzt eine Schrägfläche, die in der Lösestellung des Kuppelzapfens von einem schwenkbaren Hebel ergriffen wird. Auf diese Weise wird eine Verriegelung des Kuppelzapfens in der Lösestellung erreicht. Beim Eindringen einer Kuppelöse in das Kupplungsmaul wird der schwenkbare Hebel vom Kuppelzapfen weg verschwenkt, so daß die Verriegelung des Kuppelzapfens aufgehoben und dieser in die Kuppelstellung gedrückt wird. Zum Lösen dieser Kupplung wird ein mit dem die Kulisse tragenden Arm verbundener Handhebel verschwenkt. Um diese Kupplung auch ohne Eindringen einer Kuppelöse in die Kuppelstellung zu bringen ist ein weiterer, mit dem schwenkbaren Hebel verbundener Handhebel erforderlich.

Die Bedienung dieser bekannten Kupplung ist bedingt durch die beiden Handhebel fehleranfällig, was zu Unfällen führen kann. Außerdem besitzt diese Kupplung den Nachteil, daß der Kuppelzapfen in der Lösestellung bedingt durch das Zusammenwirken zweier Schrägflächen nur unzureichend gesichert ist. Insbesondere bei Schlägen oder Vibrationen kommt es daher vor, daß sich der Kuppelzapfen selbständig in die Kuppelstellung verschiebt. Dies führt zu Unfällen oder bei teilweise eingeschobener Kupplungsöse zu Beschädigungen des Mechanismus. Schließlich weist diese Kupplung auch eine unzureichende Verriegelung des Kuppelzapfens in der Kuppelstellung auf. Vom Motor des Zugfahrzeugs übertragene Vibrationen sowie durch die Kuppelöse ausgeübte Stöße beim Anfahren oder Verzögern sind in der Lage, den mit dem Kuppelzapfen verbundenen Arm soweit zu verschwenken, daß die Verriegelung des Kuppelzapfens in der Kuppelstellung aufgehoben ist. In diesem Fall besteht die Gefahr, daß sich der Kuppelzapfen in die Lösestellung verschiebt, und sich der Anhänger entkuppelt. Der unkontrollierbare Anhänger stellt dann eine beträchtliche Gefährdung des Straßenverkehrs dar.

Aus der DE-AS 10 74 411 ist eine weitere Anhängekupplung bekannt, deren Kuppelzapfen von einem in diesen eindringenden Arm verschwenkt wird. Zur Verschwenkung des Arms ist ein mit einem Handbetätigungshebel verbundener zweiarmiger Sperrhebel vorgesehen. Ein Arm des Sperrhebels verriegelt den Kuppelzapfen in der Kuppelstellung. Auch diese Kupplung besitzt nur einen einfach wirkenden Sicherungsmechanismus zur Sicherung des Kuppelzapfens in der Kuppelstellung. Da die Schwenkachsen des Schwenkarms und des Sperrhebels im gleichen Abstand vom Kuppelzapfen vorgesehen sind, ergeben sich für den Sperrhebel insbesondere im Schwenkbereich nahe der Lösestellung des Kuppelzapfens ungünstige Hebelverhältnisse. Es ist daher ein sehr großer Kraftaufwand zum Lösen der Kupplung erforderlich. Andererseits drückt der Sperrhebel mit einer Kraftkomponente gegen den Schwenkarm, so daß dieser im wesentlichen in Richtung der Lösestellung belastet ist. Die Sicherung des Kuppelzapfens in der Lösestellung ist daher bereits bei geringen Deformationen des Schwenkarms im Bereich einer Stützrast nicht mehr gewährleistet.

Der Erfindung liegt die Aufgabe zugrunde, eine bedienungsfreundliche Anhängekupplung der eingangs genannten Art zu schaffen, die sich durch eine hochbelastbare, verschleißarme und baulich einfache und sichere Verriegelung in beiden Stellungen auszeichnet.

Die gestellte Aufgabe wird erfindungsgemäß mit den im kennzeichnenden Teil des Patentanspruchs 1 enthaltenen Merkmalen gelöst.

Bei dieser Ausbildung wird mit baulich geringem Aufwand und relativ leichtgewichtigen, platzsparenden Komponenten eine besonders sichere und hoch belastbare Verriegelung des Kuppelzapfens in der Kuppelstellung erreicht. Der den Kuppelzapfen verriegelnde Kniegelenksmechanismus überträgt auch sehr hohe Belastungen problemlos in den Kupplungskopf, ohne nennenswert zu verschleißen oder deformiert zu werden. Bei einer extremen Überlast bricht die Verbindung zwischen dem Kuppelzapfen und dem Kniegelenksmechanismus, wobei eine eingeschränkte Benutzbarkeit der Anhängekupplung erhalten bleibt und der Schaden mit geringem Aufwand rasch zu beheben ist. Aufgrund der Mechanik im Kniegelenkmechanismus wächst der Widerstand, den der Kniegelenkmechanismus der Verstellung des Kuppelzapfens entgegenstellt, mit zunehmender Belastung des Kuppelzapfens in Richtung auf die Lösestellung. Der Arm wird bei einer Belastung des Kuppelzapfens in Richtung zur Lösestellung auf Druck beansprucht. Diese Belastung wird über die Kulisse, den Querfortsatz und da Arm verschleißarm in den Kupplungskopf übertragen. Die Tastzunge wird durch eine in das Kupplungsmaul eingeschobene Deichselöse verschwenkt, wobei der Entsperrvorsprung die Entsperrklinke des Lösehebels betätigt und die Verriegelung des Kuppelzapfens in dessen Lösestellung selbsttätig aufhebt. Dadurch fällt der Lösehebel in seine Lösestellung und der Kuppelzapfen senkt sich unter dem Druck der Feder am Arm in die Kuppelstellung, in der er durch den Arm selbsttätig verriegelt wird. Der zusätzliche Sicherungsanschlag des Lösehebels sperrt eine Verschwenkbewegung des Armes, wenn aus irgendwelchen Umständen die formschlüssige Blockierung des Kniegelenksmechanismus nicht ordnungsgemäß eingetreten sein sollte.

Eine kompakte, funktionssichere und robuste Ausführungsform ergibt sich, wenn der Querfortsatz ein eine Längsnut im Kuppelzapfen überbrückender Bolzen ist, der die im freien Endbereich des Arms mit zwei Schenkein L-förmig ausgebildete Kulisse durchsetzt, und der Arm in die Längsnut des Kuppelzapfens eingreift. Die Verriegelung des Kuppelzapfens in der Kuppelstellung erfolgt sozusagen im Inneren des Kuppelzapfens, wodurch einerseits Platz gespart und andererseits seitliche Deformationskräfte und Biegemomente am Kuppelzapfen vermieden werden.

Vorteilhaft wird die Anhängekupplung derart ausgebildet, daß die Achse - in der Kuppelstellung des Kuppelzapfens und in Stellrichtung des Kuppelzapfens zur Lösestellung gesehen - mit einem Abstand hinter dem und seitlich beabstandet vom Querfortsatz angeordnet ist, daß der eine Schenkel der Kulisse in etwa in Längsrichtung des Arms verläuft und eine Freistellung für den Querfortsatz bildet, und daß der andere Schenkel der Kulisse etwa rechtwinklig zum einen Schenkel und schräg durch die Bewegungsbahn des Querfortsatzes bei der Verstellung des Kuppelzapfens verläuft. Bei dieser Ausführungsform wird der Querfortsatz unter einer am Kuppelzapfen angreifenden Last in den anderen Schenkel der Kulisse gepreßt, die schräg durch die Bewegungsbahn des Querfortsatzes verläuft. Da der Querfortsatz nur geradlinig mit dem Kuppelzapfen verstellbar ist, wird der Arm zuverlässig und so lange gegen ein Verschwenken abgestützt, bis der Querfortsatz in den einen Schenkel der Kulisse eintreten kann. Dies wird ihm jedoch nur durch eine willkürlich und extern erzeugte Schwenkbewegung des Armes ermöglicht. Diese Schwenkbewegung muß bewußt von einer Bedienungsperson eingeleitet werden, um die Kupplung zu lösen. Ein ungewolltes Lösen der Kupplung ist deshalb ausgeschlossen.

Ist der Arm durch eine Feder entgegengesetzt zur Verstellrichtung des Kuppelzapfens in die Lösestellung beaufschlagt, so drückt die Feder den Arm in Richtung auf die Verriegelungsstellung des Kuppelzapfens, um diesen zuverlässig zu verriegeln. Zusätzlich dient die Feder als Antriebselement, das den Kuppelzapfen aus der Lösestellung ohne fremde Hilfe in die Kuppelstellung verstellt. Der Kuppelzapfen braucht demzufolge nicht mittels des Handhebels in die Kuppelstellung überbracht zu werden.

Eine weitere, zweckmäßige Ausführungsform geht aus Anspruch 2 hervor. Der Arm hat eine weitere Funktion, weil er den Kupplungszapfen gegen eine Verdrehung um seine Längsachse sichert.

Bei der Ausführungsform gemäß Anspruch 3 ist der Kuppelzapfen in der Lösestellung leicht und haltbar verriegelbar. Diese Verriegelung läßt sich mittels des Lösehebels leicht lösen, damit der Kuppelzapfen selbsttätig wieder in die Kuppelstellung zurückkehrt. Ferner wird der Kuppelzapfen mittels der Schwenkbewegung des Lösehebels über den Arm aus der Kuppelstellung in die verriegelte Lösestellung verstellt, wobei selbsttätig zunächst die Verriegelung in der Kuppelstellung gelöst und dann selbsttätig die Verriegelung in der Lösestellung hergestellt wird.

Bei der Ausführungsform gemäß Anspruch 4 ist die Funktionssicherheit verbessert. Der Lösehebel wird an der Auflage abgestützt, wenn sich der Kuppelzapfen in der Kuppelstellung befindet. Er hält auf diese Weise eine vorbestimmte Bereitstellungslage ein, in der auch der Handhebel abgestützt ist und griffgünstig steht. Durch Verschwenken des Handhebels läßt sich der verriegelte Kuppelzapfen lösen und in die Lösestellung verstellen, in der er selbsttätig wieder verriegelt wird. Über diese Verriegelung wird auch der Handhebel in der Lösestellung der Kupplung festgelegt. Zum Überführen des Kuppelzapfens in die Kuppelstellung braucht nur die Verriegelung mittels des Handhebels gelöst zu werden, damit der Kuppelzapfen selbsttätig in die Kuppelstellung geht.

Bei der Ausführungsform gemäß Anspruch 5 ergeben sich günstige Hebelverhältnisse für die Verriegelung des Kuppelzapfens in der Lösestellung, d.h. eine leicht einrückbare und wieder leicht lösbare Verriegelung.

Anhand der Zeichnung wird eine Ausführungsform des Erfindungsgegenstandes erläutert.

Es zeigt:
- Figur 1: einen Längsschnitt durch eine Anhängekupplung in der Kuppelstellung des Kuppelzapfens und
- Figur 2: einen Längsschnitt der Auhängekupplung von Figur 1 bei in der Lösestellung verriegeltem Kuppelzapfen.

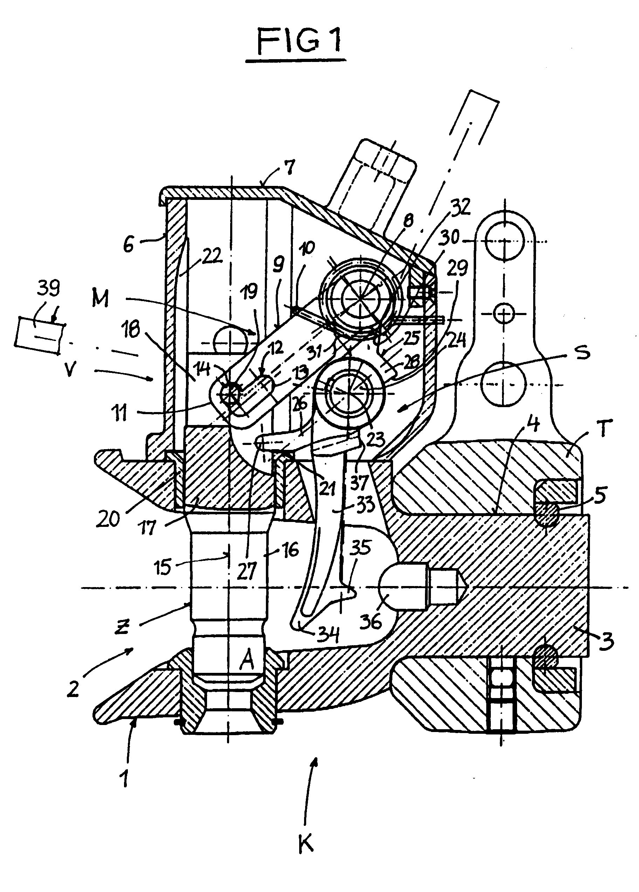

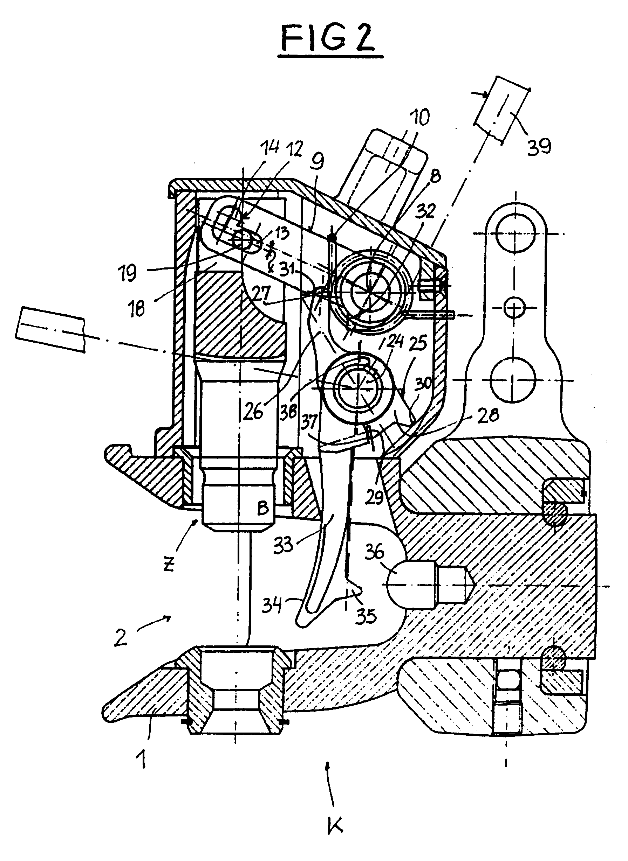

Eine Anhängekupplung gemäß den Figuren 1 und 2 wird auf übliche Weise mittels eines Tragteils T an ein Zugfahrzeug angebaut. Die Anhängekupplung K weist einen Kupplungskopf 1 mit einem Kupplungsmaul 2 auf. Ein Kuppelzapfen Z ist zwischen einer Kuppelstellung A (Figur 1), in der er das Kupplungsmaul 2 quer durchsetzt, und einer zurückgezogenen Lösestellung B (Figur 2) linear verstellbar im Kupplungskopf 1 geführt. Zum Verriegeln des Kuppelzapfens Z in der Kuppelstellung ist eine Verriegelungsvorrichtung V vorgesehen, die bei der gezeigten Ausführungsform einen Kniegelenkmechanismus M enthalt. Ferner ist ein Stellantrieb S zum Verstellen des Kuppelzapfens Z vorgesehen.

Der Kupplungskopf 1 ist mit einem rückwärtigen Schaft 3 in einer Bohrung 4 des Tragteils T abgestützt und mittels eines Halteteils 5 und eines diesen umfassenden Rings lagegesichert.

Der Oberteil des Kupplungskopfes 1 ist mit Wandungen 6 und einem Deckel 7 gehäuseartig ausgebildet, um die für die Verriegelung und Verstellung des Kuppelzapfens Z notwendigen Komponenten geschützt unterzubringen. An einer senkrecht zur Längsachse 15 des Kuppelzapfens Z und im seitlichen Abstand davon im Kupplungskopf angeordneten Achse 8 ist ein Arm 9 schwenkbar gelagert, der durch eine Schenkelfeder 10 in Figur 1 entgegen dem Uhrzeigersinn um die Achse 8 beaufschlagt wird. Im freien Endbereich 11 des Armes 9 ist eine Kulisse 12 vorgesehen, die aus zwei Schenkeln 13 und 14 zusammengesetzt ist. Der eine, längere Schenkel 13 erstreckt sich in etwa in Längsrichtung des Armes 9 und ist als Langloch ausgebildet, dessen Längsachse (siehe Figur 2) um ein Maß x gegenüber der Längsachse des Armes 9 in der Richtung zum Kupplungsmaul 2 hin versetzt liegt. Der Schenkel 14 der Kulisse 12 verläuft von dem freien Endbereich 11 zugewandten Ende des Schenkels 13 in etwa senkrecht zu diesem und vom Kupplungsmaul 2 weg und schräg durch die durch die Mittelachse 15 angedeutete Bewegungsbahn eines Querfortsatzes 19 des Kuppelzapfens Z und zwar in der Kuppelstellung gemäß Figur 1 zur der Achse 8 gegenüberliegenden Seite nach oben. Der Querfortsatz 19 ist ein Bolzen, der die Längsachse 15 des Kuppelzapfens senkrecht schneidet und eine Längsnut 18 überbrückt, die in etwa in der Mitte eines verdickten Schaftes 17 des Kuppelzapfens Z angeordnet ist. Der Schaft 17 ist nach unten durch einen verjüngten, zylindrischen Abschnitt 15 des Kuppelzapfens Z fortgesetzt.

Im Kupplungskopf 1 ist in einer Durchgangsbohrung eine Buchse 20 zum Führen des Kuppelzapfens Z vorgesehen, die mit ihrem oberen Rand eine Auflage 21 bildet. In der Wandung 6 ist eine Führungsnut 22 auf den freien Endbereich 11 des Arms 9 ausgerichtet, in die der freie Endbereich 11 bei einer Schwenkbewegung des Arms 9 eingreifen kann.

Um eine zur Achse 8 parallele und zwischen dieser und dem Kupplungsmaul 2 liegende Querachse 23 ist ein Lösehebel 25 schwenkbar angeordnet, der durch einen Keil 38 mit einer Stellwelle 24 drehfest verbunden ist. Die Stellwelle 24 ist in den Wandungen 6 des Kupplungskopfes 1 drehbar gelagert und ragt zumindest an einer Seite nach außen vor. Auf der Stellwelle 24 ist ein Handhebel 39 drehfest angebracht.

Der Lösehebel 25 ist als zweiarmiger Hebel ausgebildet. Ein Arm 26, mit dem der Lösehebel 25 an der Auflage 21 abstützbar ist, trägt am freien Ende eine Rastnase 27. Ein in etwa diametral gegenüberliegender Arm 28 des Lösehebels 25 trägt an einer Seite einen Sicherungsanschlag 30 und bildet eine Entsperrklinke 29. Die Rastnase 27 ist in Schwenkrichtung des Lösehebels 25 auf die Unterseite des Arms 9 ausgerichtet. In der Unterseite des Arms 9 ist nahe der Achse 8 eine Rastvertiefung 31 für die Rastnase 27 eingeformt. Im Anschluß an die Rastvertiefung 31 ist im Arm 9 ein Anschlag 32 vorgesehen, auf den der Sicherungsanschlag 31 des Lösehebels 25 in seiner in Figur 1 gezeigten Schwenklage ausgerichtet ist.

Auf der Stellwelle 24 ist schwenkbar eine in das Kupplungsmaul 2 nach unten ragende Tastzunge 33 gelagert, die mit ihrem freien Ende 34 von einer in das Kupplungsmaul 2 eingeführten Kuppelöse kontaktiert und mit einem rückseitigen Vorsprung 35 gegen einen Dämpfanschlag 36 geschwenkt wird. An der Tastzunge 33 ist rückseitig ein Entsperrvorsprung 37 angeordnet, der auf die Entsperrklinke 29 des Auslösehebels 25 ausgerichtet ist.

In der in Figur 1 gezeigten Kuppelstellung A des Kuppelzapfens Z ist dieser mit dem Querfortsatz 19 im Kulissenschenkel 14 verriegelt, wirkt eine Belastung am Kuppelzapfen Z, die diesen in Richtung auf seine Lösestellung B zu verschieben sucht, dann wird diese Bewegung durch den Arm 9 gesperrt. Die Reaktionskräfte werden auf die Achse 8 und damit auf den Kupplungskopf 1 übertragen. Sollte aufgrund einer Fehlfunktion der Quervorsprung 19 in den Schenkel 13 eintreten, dann sperren die aneinander anliegenden Anschläge 30, 32 die Schwenkbewegung des Armes 9.

Um den Kuppelzapfen Z in die in Figur 2 gezeigte Lösestellung zu verstellen, ist es deshalb notwendig, den Handhebel 39 aus der Stellung von Figur 1 im Uhrzeigersinn in die Stellung von Figur 2 zu verschwenken. Dadurch verdreht sich der Lösehebel 25 im Uhrzeigersinn, wobei die Rastnase 27 entlang der Unterseite des Arms 9 abläuft und zunächst den Arm 9 soweit verschwenkt, bis der Querfortsatz 9 in den Schenkel 13 der Kulisse 12 eintritt. Da der Schenkel 13 eine Freistellung für den Querfortsatz 19 bildet, läßt sich der Arm 9 über den Lösehebel 25 weiter im Uhrzeigersinn verschwenken, bis schließlich die Rastnase 27 in die Rastvertiefung 31 einfällt und der Kuppelzapfen Z in der in Figur 2 gezeigten Lösestellung verriegelt ist. Nach Loslassen des Handhebels 39 behält der Kuppelzapfen seine Lage bei.

Soll der Kuppelzapfen Z von Hand wiederum zurück in die Kuppelstellung A verstellt werden, dann wird über den Handhebel 39 der Lösehebel 25 entgegen dem Uhrzeigersinn verschwenkt, wobei die Rastnase 27 gegen die Kraft der Feder 10 aus der Rastvertiefung 31 austritt, bis schließlich der Arm 26 auf der Auflage 21 aufliegt. Die Feder 10 schiebt den Kuppelzapfen Z in die Kuppelstellung, wobei letztendlich selbsttätig der Querfortsatz 19 wieder in den Schenkel 14 eintritt, so daß der Kuppelzapfen verriegelt ist.

Wird bei in der Lösestellung gemäß Figur 2 befindlichen Kuppelzapfen Z eine Kuppelöse in das Kupplungsmaul 2 eingeführt, dann wird die Tastzunge 33 entgegen dem Uhrzeigersinn verschwenkt, wobei der Entsperrvorsprung 31 die Entsperrklinke 29 des Auslösehebels 25 beaufschlagt und diesen entgegen dem Uhrzeigersinn auf die vorerwähnte Weise soweit verschwenkt, bis zunächst die Rastnase 27 aus der Rastvertiefung 31 austritt, der Arm 26 auf die Auflage 21 fällt und die Feder 10 den Arm 9 in die in Figur 1 gezeigte Lage verschwenkt und den Kuppelzapfen verriegelt.

Es ist ferner möglich, den Lösehebel 25 und/oder die Tastzunge 33 ferngesteuert vom Zugfahrzeug aus entsprechend zu verstellen, um die Anhängekupplung K zu betätigen. Ferner wäre es denkbar, den Arm 9 seitlich neben dem Kuppelzapfen Z anzuordnen und den Querfortsatz an einer Seite des Kuppelzapfens vorstehen zu lassen. Genauso wäre es aber auch möglich, zwei parallele Arme 9 an beiden Seiten des Kuppelzapfens an je einem Querfortsatz angreifen zu lassen.

## Patentansprüche

1. Anhängekupplung für ein Zugfahrzeug mit einem Kupplungskopf (1), in dem ein Kuppelzapfen (Z) zwischen einer ein Kupplungsmaul (2) durchsetzenden Kuppelstellung (A) und einer zurückgezogenen Lösestellung (B) verstellbar geführt ist, wobei der Kuppelzapfen (Z) einen Querfortsatz (19) aufweist, an den ein um eine Achse (8) schwenkbarer Kulissenarm (9) über eine Kulisse (12) gekoppelt ist, die den Kuppelzapfen (Z) in der Kuppelstellung (A) verriegelt und im Kupplungskopf (1) ein um eine zur Achse (8) parallele Querachse (23) schwenkbarer Lösehebel (25) vorgesehen ist, dadurch gekennzeichnet, daß die Querachse (23) einen geringeren Abstand zum Kuppelzapfen (Z) aufweist als die Achse (8) des Kulissenarms (9), und der Lösehebel (25) zweiarmig ausgebildet ist, wobei einer der Arme (26) als Stützarm ausgebildet ist und eine Rastnase (27) aufweist, welche in der Lösestellung (B) des Kuppelzapfens (Z) in eine Rastvertiefung (31) des Kulissenarms (9) einrastet und der andere Arm (28) einen Sicherungsanschlag (30) trägt, der in der Kuppelstellung (A) des Kuppelzapfens (Z) einen am Kulissenarm (9) vorgesehenen Anschlag (32) hintergreift und den Kuppelzapfen (Z) zusätzlich sichert.

2. Anhängekupplung nach Anspruch 1, dadurch gekennzeichnet, daß der in eine Längsnut (18) des Kuppelzapfens (Z) eingreifende Kulissenarm (9) als Drehsicherung des Kuppelzapfens (Z) um seine Längsachse (15) ausgebildet ist, und daß, vorzugsweise im Kupplungskopf (1), eine parallel zur Längsachse (15) des Kuppelzapfens (Z) verlaufende Führungsnut (22) vorgesehen ist, in die der freie Endbereich (11) des Kulissenarms (9) bei der Verstellung des Kuppelzapfens (Z) eingreift.

3. Anhängekupplung nach Anspruch 1, dadurch gekennzeichnet, daß der Lösehebel (25) mittels eines Handhebels (39) verschwenkbar ist und als am Kulissenarm (9) angreifender Verstellantrieb (S) für die Verstellung des Kuppelzapfens (Z) in die Lösestellung (B) dient.

4. Anhängekupplung nach mindestens einem der Ansprüche 1 bis 3, dadurch gekennzeichnet, daß im Kupplungskopf (1) eine Auflage (21) für den Lösehebel (25) vorgesehen ist, an der dieser in der Kuppelstellung (A) des Kuppelzapfens (Z) mit seinem Stützarm (26) abstützbar ist, daß der Lösehebel (25) mit einer aus dem Kupplungskopf (1) herausgeführten Stellwelle (24) im Kupplungskopf (1) gelagert ist, daß der Handhebel (39) an der Außenseite des Kupplungskopfes (1) auf der Stellwelle (24) befestigt ist, und daß die Stellwelle (24) an der dem Maul zugewandten Seite des Kulissenarms (9) angeordnet ist.

5. Anhängekupplung nach Anspruch 1 oder 3, dadurch gekennzeichnet, daß die Rastvertiefung (31) nahe der Achse (8) des Kulissenarms (9) angeordnet ist.

## Claims

1. A trailer coupling for a traction vehicle with a coupling head (1), wherein a coupling pin (Z) is carried for displacement between a coupling position (A) passing through a coupling opening (2) and a retracted released position (B), in which arrangement the coupling pin (Z) has a transverse extension (19) to which there is coupled a pivotable connecting arm (9) via a slideway (12), which locks the coupling pin (Z) in the coupling position (A), and a releasing lever (25) is provided in the coupling head (1), which lever is pivotable round an axis (8) that is parallel to the transverse axis (23), characterized in that the transverse axis (23) is placed at a shorter distance from the coupling pin (Z) than the axis (8) of the arm (9) with the slideway, and the releasing lever (25) is designed as a two-armed lever, in which arrangement one (26) of the arms is designed as a supporting arm and has an engagement projection (27) which in the released position (B) of the coupling pin (Z) engages in an engagement recess (31) of the arm (9) with the slideway, and the other arm (28) carries a securing stop (30) which engages in the coupling position (A) of the coupling pin (Z) behind a stop (32) provided on the arm (9) with the slideway and additionally secures the coupling pin (Z).

2. A trailer coupling according to claim 1, characterized in that the arm (9) with the slideway engaging in a slot (18) of the coupling pin (Z) is designed as a means preventing rotation of the coupling pin (Z) round its longitudinal axis (15); and that, preferably, there is provided in the coupling head (1) a guide groove (22) extending parallel to the longitudinal axis (15) of the coupling pin (Z), in which groove there engages the free end zone (11) of the arm (9) with the slideway during the displacement of the coupling pin (Z).

3. A trailer coupling according to claim 1, characterized in that the releasing lever (25) is pivotable by means of a manual lever (39) and serves as a displacing drive (S) that acts on the arm (9) with the slideway, for the displacement of the coupling pin (Z) into the released position (B).

4. A trailer coupling according to at least one of claims 1 to 3, characterized in that in the coupling head (1) there is provided a bearing means (21) for the releasing lever (25), whereon the latter can be supported by means of its supporting arm (26) in the coupling position (A) of the coupling pin (Z); that the releasing lever (25) is mounted in the coupling head (1) with a setting shaft (24) which carried out of the coupling head (1); that the manual lever (39) is secured at the outside of the coupling head (1) on the setting shaft (24); and that the setting shaft (24) is arranged on the side of the arm (9) with the slideway which faces the opening.

5. A trailer coupling according to claim 1 or 3, characterized in that the engagement recess (31) is arranged near the axis (8) of the arm (9) with the slideway.

## Revendications

1. Attelage de remorque pour un véhicule tracteur, comportant une tête d' attelage (1) dans laquelle est guidé un tourillon d'accouplement (Z), avec une possibilité de déplacement entre une position d'attelage (A), passant au travers d'une fourche (2), et une position de dételage en retrait (B), le tourillon d'accouplement (Z) présentant un prolongement transversal (19), auquel est accouplé un bras de coulisse (9), doté d'une possibilité de pivotement autour d'un axe (8), par l'intermédiaire d'une coulisse (12) qui verrouille le tourillon (Z) dans la position d'attelage (A), et un levier de déblocage (25), doté d'une possibilité de pivotement autour d'un axe transversal (23) parallèle à l'axe (8), étant prévu dans la tête d'attelage (1), caractérisé en ce que l'axe transversal (23) présente, par rapport au tourillon d'accouplement (Z), une distance inférieure à celle de l'axe (8) du bras de coulisse (9), et en ce que le levier de déblocage (25) est réalisé sous forme de levier à deux bras, l'un des bras (26) étant réalisé sous forme de bras d'appui et présentant un ergot d'arrêt (27), qui s'enclenche dans une cavité d'arrêt (31) du bras de coulisse (9) dans la position de dételage (B) du tourillon d'accouplement (Z), et l'autre bras (28) supportant une butée de sécurité (30), qui enserre une butée (32) prévue sur le bras de coulisse (9), dans la position d'attelage (A) du tourillon (Z), et bloque en supplément le tourillon d'accouplement (Z).

2. Attelage de remorque suivant la revendication 1, caractérisé en ce que le bras de coulisse (9), qui s'engage dans une rainure longitudinale (18) du tourillon d'accouplement (Z), est réalisé sous forme de sécurité anti-rotation du tourillon (Z) autour de son axe longitudinal (15), et en ce qu'une rainure de guidage (22), parallèle à l'axe longitudinal (15) du tourillon d'accouplement (Z), est prévue, dans la tête d'attelage (1) de préférence, rainure dans laquelle s'engage la zone extrême libre (11) du bras de coulisse (9) lors du déplacement du tourillon d'accouplement (Z).

3. Attelage de remorque suivant la revendication 1, caractérisé en ce que le levier de déblocage (25) peut pivoter au moyen d'un levier à main (39), et sert de commande de positionnement (S), attaquant le bras de coulisse (9), pour le déplacement du tourillon d'accouplement (Z) dans la position de dételage (B).

4. Attelage de remorque suivant l'une au moins des revendications 1 à 3, caractérisé en ce qu'un appui (21) est prévu dans la tête d'attelage (1) pour le levier de déblocage (25), appui sur lequel peut s'appuyer le levier, par son bras d'appui (26), dans la position d'attelage (A) du tourillon d'accouplement (Z), en ce que le levier de déblocage (25) est logé dans la tête d'attelage (1) par un arbre de positionnement (24), sortant de la tête (1), en ce que le levier à main (39) est fixé sur l'arbre de positionnement (24), sur le côté externe de la tête d'attelage (1), et en ce que l'arbre de positionnement (24) est disposé sur le côté, tourné vers la fourche, du bras de coulisse (9).

5. Attelage de remorque suivant l'une des revendications 1 ou 3, caractérisé en ce que la cavité d'arrêt (31) est disposée au voisinage de l'axe (8) du bras de coulisse (9).
